# EUROPÄISCHE PATENTSCHRIFT

(11) **EP 2 360 045 B1**
(45) Veröffentlichungstag und Bekanntmachung des Hinweises auf die Patenterteilung: **05.09.2012**
(21) Anmeldenummer: 11405203.8
(22) Anmeldetag: 19.01.2011
(51) Int. Cl.: B60K 7/00, B60K 1/00, B60K 17/04, F16H 1/06, F16H 55/22, F16H 55/08

(54) **Elektrischer Einzelradantrieb für einen Rollstuhl**
Electric single wheel drives for a wheelchair
Entraînement électrique à roue unique pour un fauteuil roulant

(30) Priorität: 15.02.2010 CH 186102010
(43) Veröffentlichungstag der Anmeldung: 24.08.2011
(73) Patentinhaber: Micro-Motor AG, 4106 Therwil (CH)
(72) Erfinder: Borngräber, Oliver, 79674 Todtnau (DE); Hungerbühler, Michael, 4059 Basel (CH)
(74) Vertreter: Detken, Andreas

(56) Entgegenhaltungen:
- DE-A1- 10 158 893
- DE-C- 183 011
- DE-U1- 8 433 139
- ROTH K: "EVOLVENTENVERZAHNUNGEN MIT EXTREMEN EIGENSCHAFTEN. ÖTEIL IIB: EVOLOIDVERZAHNUNGEN MIT RITZELZAEHNEZAHLEN VON Z2 = 3-8 FUER GROSSE UEBERSETZUNGEN INS SCHNELLE", ANTRIEBSTECHNIK, VEREINIGTE FACHVERLAGE, MAINZ, DE, Bd. 35, Nr. 9, 1. September 1996 (1996-09-01), Seiten 69-74, XP000622845, ISSN: 0722-8546
- ROTH K: "EVOLVENTENVERZAHNUNGEN MIT EXTREMEN EIGENSCHAFTEN", ANTRIEBSTECHNIK, VEREINIGTE FACHVERLAGE, MAINZ, DE, Bd. 35, Nr. 7, 1. Juli 1996 (1996-07-01), Seiten 43-48, XP000598602, ISSN: 0722-8546

## Beschreibung

Die Erfindung betrifft einen elektrischen Einzelradantrieb für einen Rollstuhl oder ein anderes Leichtfahrzeug nach dem Oberbegriff des Anspruchs 1.

Rollstühle mit einem Antrieb ermöglichen es Menschen mobil zu sein, die körperlich behindert sind und nicht oder nur noch begrenzt gehen können. Zweckmässig sind insbesondere Elektroantriebe, die mit einem mitnehmbaren Speicher, beispielsweise einem Akkumulator gespiesen werden können. Der Motor sollte möglichst leicht und klein sein. Ein solcher Antrieb soll eine vergleichsweise hohe Untersetzung bei hohem Wirkungsgrad und guter Geräuschdämpfung aufweisen. Gewünscht und wesentlich ist zudem ein hoher Wirkungsgrad, so dass die verfügbare Energie möglichst ohne Verlust für die Bewegung des Fahrzeuges umgesetzt werden kann.

Durch diel gattungsbildende DE-U-84 33 139 ist ein elektrischer Einzelantrieb der genannten Art bekannt geworden, bei dem ein Zahnritzel direkt auf der Motorachse angebracht ist und das an einem Zahnkranz angreift, welcher als mittragender Teil der Felge des Antriebsrades ausgebildet ist. Ein solcher Einzelradantrieb kann mit vergleichsweise wenigen Einzelteilen realisiert werden. Nachteilig sind hier jedoch die vergleichsweise geringe Untersetzung und die vergleichsweise hohe Geräuschbildung. Die FR-B-0 236 029 offenbart einen Antrieb, der ein Schneckengetriebe aufweist. Dieses ermöglicht eine vergleichsweise grosse Untersetzung, besitzt jedoch einen schlechten Wirkungsgrad. Die DE-A-197 16 538 offenbart ein einstufiges Getriebe, bei dem der Elektromotor exzentrisch in einem Getriebegehäuse befestigt ist und an einem antriebsseitigen Ende einer Abtriebswelle ein flaches topfförmiges Hohlrad befestigt ist, dessen Innenrad mit einer Verzahnung versehen ist. Ein am Ende der Motorwelle befestigtes Ritzel kämmt mit der Verzahnung dieses Hohlrades. Dieser Antrieb besitzt eine vergleichsweise kleine Untersetzung und dürfte ebenfalls ein vergleichsweise hohes Geräusch erzeugen. Die EP-B-1 328 120 offenbart einen Antrieb für Rollstühle, bei dem ein Ritzel mit einer Stirnradverzahnung auf einen Innenzahnkranz wirkt. Die Untersetzung ist auch hier vergleichsweise gering. Ein ähnlicher Antrieb ist im Stand der Technik durch die GB-A-2 043 554 bekannt geworden.

In den Fachzeitschriften Antriebstechnik, Vereinigte Fachverlage, Mainz, DE, Band 39, Nr. 9.1, September (1996-09-01), Seiten 69 - 74, XP000622845, ISSN: 0722-8546 und Band 35, Nr. 7.1, Juli 1996 (1996-07-01), Seite 43 - 48, XP000598602, ISSN: 0722-8546 sind ganz allgemein Evolventenverzahnungen mit extremen Eigenschaften offenbart.

Der Erfindung liegt die Aufgabe zugrunde, einen elektrischen Einzelradantrieb der genannten Gattung zu schaffen, der bei hohem Wirkungsgrad und guter Geräuschdämpfung kostengünstig hergestellt werden kann.

Die Aufgabe ist beim gattungsgemässen elektrischen Einzelradantrieb gemäss Anspruch 1 gelöst. Ein solcher Einzelradantrieb ermöglicht mit einem vergleichsweise leichten und kleinen Motor eine sehr hohe Untersetzung bei gleichzeitig hohem Wirkungsgrad. Das Ritzel kann auf die Motorwelle aufgesetzt sein oder die Zähne können direkt in die Motorwelle eingearbeitet sein. Dies ermöglicht eine besonders kostengünstige Herstellung mit wenigen Einzelteilen.

Nach der Erfindung ist vorgesehen, dass das Ritzel über wenigstens ein Hilfszahnrad auf den Innenzahnkranz wirkt, wobei die Achse des wenigstens einen Hilfszahnrades parallel zur Motorwelle verläuft. Das Hilfszahnrad kann zweistufig ausgebildet sein, was eine noch höhere Untersetzung ermöglicht.

Nach der Erfindung ist zudem vorgesehen, dass das Ritzel über zwei Hilfszahnräder auf den Innenzahnkranz wirkt, wobei die Kraft des Ritzels im Wesentlichen gleichmässig auf die beiden Hilfszahnräder verteilt wird. Dies hat den wesentlichen Vorteil, dass die kämmenden Zähne weniger belastet sind und somit ein Zahnbruch weniger wahrscheinlich wird. Die Ritzel und insbesondere die Hilfszahnräder und der Innenzahnkranz können dann im Wesentlichen ohne Bruchgefahr aus Kunststoff hergestellt werden. Ein solcher Antrieb ist dann besonders leicht und kann besonders kostengünstig hergestellt werden. Ebenfalls ist die Geräuschbildung minim. Dies insbesondere dann, wenn gemäss einer Weiterbildung der Erfindung die beiden Hilfszahnräder bezüglich des Ritzels diametral gegenüber angeordnet sind. Durch die Anordnung des Ritzels zwischen zwei Hilfszahnrädern kann die Motorwelle besonders wirksam gegen ein Durchbiegen geschützt werden.

Die Zahl der Zähne des Ritzels ist vergleichsweise klein und liegt im Bereich von zwei bis acht Zähnen. Vorzugsweise sind zwei bis sechs und noch bevorzugter zwei bis vier Zähne vorgesehen. Die Steigung der Zähne ist vorzugsweise gleich oder grösser als 10°. Vorzugsweise ist die Steigung nicht höher als etwa 25°. Entsprechend der Steigung der Zähne ist der Innenzahnkranz bzw. das wenigstens eine Hilfszahnrad mit einer Schrägverzahnung versehen.

Weitere vorteilhafte Merkmale ergeben sich aus den abhängigen Patentansprüchen, der nachfolgenden Beschreibung sowie der Zeichnung. Es zeigen:
- Fig. 1: schematisch eine Ansicht eines erfindungsgemässen Einzelradantriebes,
- Fig. 2: ein Schnitt durch den Antrieb entlang der Linie I-I der Fig. 1,
- Fig. 3: ein Schnitt durch einen Teil des Antriebes und
- Fig. 4: ein Schnitt gemäss Fig. 3 jedoch durch eine Variante des Antriebs.

Der Einzelantrieb 1 ist in üblicher Weise an einem Rollstuhl oder einem anderen Leichtfahrzeug angeordnet. Die Steuerung des Einzelradantriebes 1 erfolgt beispielsweise in üblicher Weise an einem hier nicht gezeigten Joystick. Die elektrische Versorgung erfolgt beispielsweise mit einem auf dem Leichtfahrzeug angeordneten hier nicht gezeigten Akkumulator. Die Kraft für den Antrieb wird von einem Elektromotor 5 aufgebracht, der handelsüblich sein kann. Dieser Motor 5 ist an einem Getriebegehäuse 2 befestigt, das seinerseits an einem hier nicht gezeigten Gestell des Leichfahrzeuges befestigt ist und das eine Achse 3 besitzt auf welchem ein Laufrad 4 gelagert ist. Zur Lagerung besitzt das Laufrad 4 eine Felge 10, die zentrisch eine Nabe 13 mit einem Achslager 12 aufweist. Das Laufrad 4 kann üblicherweise einen Reifen 11 aufweisen, der auf die Felge 10 aufgezogen ist.

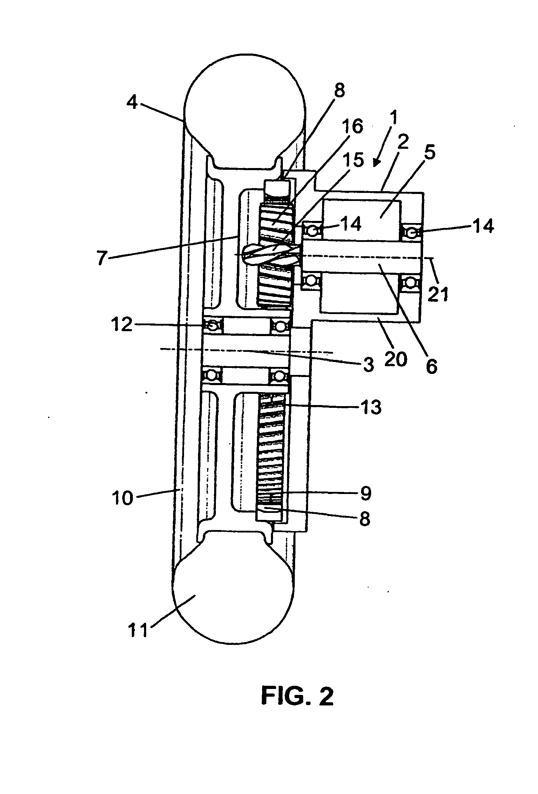

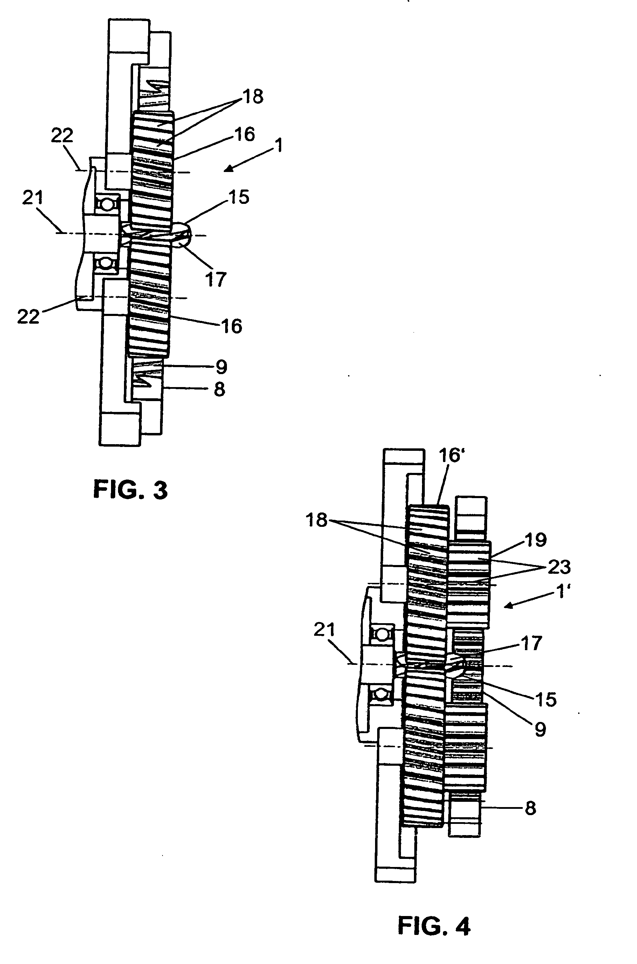

Der Motor 5 besitzt eine Motorwelle 6, die exzentrisch und parallel zur Achse 3 des Laufrades 4 verläuft. Die Motorwelle 6 ist in üblicher Weise mit zwei Motorlager 14 in einem Motorgehäuse 20 gelagert. Die Motorwelle 6 durchgreift gemäss Fig. 2 das Getriebegehäuse 2 und besitzt an einem inneren Ende ein Ritzel 15. Dieses Ritzel 15 ist vorzugsweise einstückig mit der Motorwelle 6 ausgebildet und besitzt gemäss Fig. 3 wenigstens zwei Zähne 17, welche die Längsachse 21 der Motorwelle 6 schraubenförmig umlaufen. Das Ritzel 15 ist wie ersichtlich etwa stabförmig ausgebildet und besitzt einen vergleichsweise kleinen Aussendurchmesser. Die Anzahl der Zähne ist vergleichsweise klein, vorzugsweise kleiner als acht und noch bevorzugter kleiner als sechs. Die Motorwelle 6 bzw. das Ritzel 15 ist vorzugsweise aus Metall hergestellt.

Das Ritzel 15 kämmt mit zwei Hilfszahnrädem 16, die jeweils eine Zahnung 18 aufweisen, die entsprechend den Zähnen 17 eine Schrägverzahnung ist. Die Hilfsräder 16 sind vorzugsweise aus einem geeigneten Kunststoff hergestellt und besitzen jeweils eine Drehachse 22, die parallel zur Motorachse 21 verläuft. Die beiden Hilfsräder 16 sind im Getriebegehäuse 2 gelagert. Wie ersichtlich sind die beiden Hilfsräder 16 bezüglich des Ritzels 15 diametral zueinander angeordnet. Der Durchmesser der beiden Ritzel 16 ist jeweils um ein mehrfaches grösser als der Durchmesser des Ritzels 15.

Die beiden Hilfszahnräder 16 kämmen jeweils mit einer Innenverzahnung 9 eines Innenzahnkranzes 8, der fest mit der Felge 10 verbunden ist. Die Innenverzahnung 9 und der Innenzahnkranz 8 sind kreisrund und konzentrisch zur Achse 3 des Laufrades 4. Eine Drehbewegung des Ritzels 15 wird somit über die beiden Hilfszahnräder 16 auf das Laufrad 4 übertragen. Aufgrund der schraubenförmigen Verzahnung des Ritzels 15 ist eine sehr hohe Untersetzung von beispielsweise 1 zu 25 möglich. Da die Antriebskraft des Ritzels 15 auf die beiden Hilfsräder 16 und schliesslich von diesen auf den Innenzahnkranz 8 verteilt wird, sind der Verschleiss und die Bruchgefahr an den entsprechenden Verzahnungen vergleichsweise klein. Insbesondere kann auch der Innenzahnkranz 8 aus Kunststoff hergestellt werden. Durch die Aufteilung der Antriebskraft ist entsprechend die Innenverzahnung 9 vergleichsweise wenig belastet.

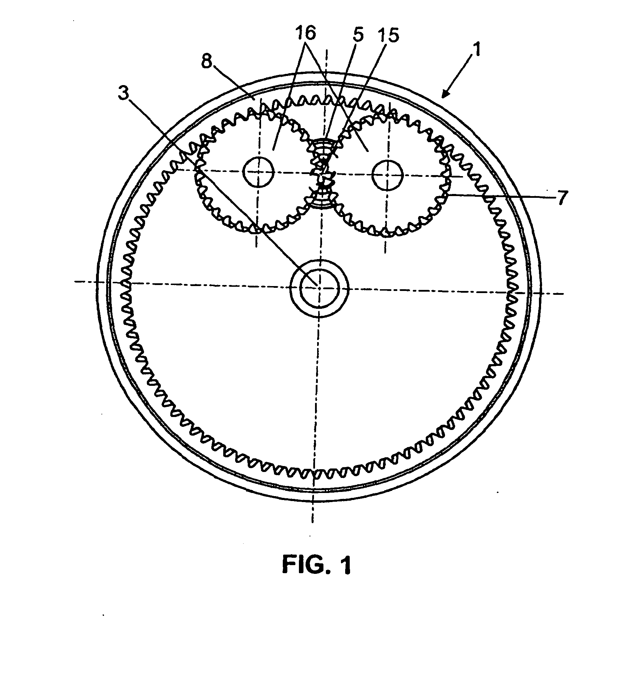

Beim gezeigten Ausführungsbeispiel gemäss den Figuren 1 bis 3 wirkt das Ritzel 15 über die Hilfszahnräder 16 auf den Innenzahnkranz 8. Denkbar ist jedoch auch eine Ausführung, bei welcher lediglich ein Hilfszahnrad 16 vorgesehen ist. Schliesslich ist auch eine Ausführung denkbar, bei welcher das Ritzel 15 direkt am Innenzahnkranz 8 angreift.

Die Fig. 4 zeigt einen Einzelradantrieb 1' gemäss einer Variante. Bei diesem sind zwei Hilfszahnräder 16' vorgesehen, die jeweils zweistufig ausgebildet sind. Diese Hilfszahnräder 16' wirken jeweils mit einer Stufe 19 auf den Innenzahnkranz 8. Diese Stufen 19 besitzen einen kleineren Aussendurchmesser als die Zahnung 18, die mit dem Ritzel 15 kämmt. Die Untersetzung wird dadurch noch grösser. Die Stufe 19 ist mit einer Zahnung 23 versehen, die mit der Zahnung 9 des Innenzahnkranzes 8 kämmt. Diese Zahnung 23 kann ebenfalls eine Schrägverzahnung oder auch eine andere Zahnung sein.

### BEZUGSZEICHENLISTE

- 1: Einzelradantrieb
- 2: Getriebegehäuse (Trägerteil)
- 3: Achse
- 4: Laufrad
- 5: Elektromotor
- 6: Motorwelle
- 7: Getriebe
- 8: Innenzahnkranz
- 9: Innenverzahnung
- 10: Felge
- 11: Reifen
- 12: Achslager
- 13: Nabe
- 14: Motorlager
- 15: Ritzel
- 16: Hilfszahnrad
- 17: Zahn
- 18: Zahnung
- 19: Stufe
- 20: Motorgehäuse
- 21: Motorachse
- 22: Achse
- 23: Zahnung

## Patentansprüche

1. Elektrischer Einzelradantrieb für einen Rollstuhl oder ein anderes Leichtfahrzeug, mit einem Getriebegehäuse (2), in dem zentrisch eine Achse (3) angeordnet ist, auf welcher ein Laufrad (4) des Leichtfahrzeuges gelagert ist, mit einem am Getriebegehäuse (2) befestigten Elektromotor (5), der eine exzentrische und parallel zur Achse (3) des Laufrades (4) verlaufende Motorwelle (6) aufweist, die zum Drehen des Laufrades (4) über ein im Getriebegehäuse (2) angeordnetes Getriebe (7) auf einen Innenzahnkranz (8) des Laufrades (4) wirkt, **dadurch gekennzeichnet, dass** die Motorwelle (6) ein Ritzel (15) aufweist, das wenigstens zwei Zähne (17) besitzt, welche die Längsachse (21) der Motorwelle (6) schraubenförmig umlaufen, dass das Ritzel (15) über zwei Hilfsräder (16, 16') auf den Innenzahnkranz (8) wirkt, wobei die Kraft des Ritzels (15) im Wesentlichen gleichmässig auf die beiden Hilfszahnräder (16, 16') verteilt wird und die Achsen (22) der zwei Hilfszahnräder (16, 16') parallel zur Achse der Motorwelle (6) verlaufen.

2. Antrieb nach Anspruch 1, **dadurch gekennzeichnet, dass** die beiden Hilfszahnräder (16, 16') bezüglich des Ritzels (15) diametral gegenüber angeordnet sind.

3. Antrieb nach Anspruch 1 oder 2, **dadurch gekennzeichnet, dass** das Ritzel (15) zwei bis acht, vorzugsweise zwei bis sechs und noch bevorzugter zwei bis vier Zähne (17) aufweist.

4. Antrieb nach einem der Ansprüche 1 bis 3, **dadurch gekennzeichnet, dass** die Zähne (17) des Ritzels (15) eine Steigung aufweisen, die gleich oder grösser ist als 10°.

5. Antrieb nach einem der Ansprüche 1 bis 4, **dadurch gekennzeichnet, dass** der Innenzahnkranz (8) und/oder die zwei Hilfszahnräder (16, 16') eine Schrägverzahnung aufweisen, mit welcher bzw. welchen die Zähne (17) des Ritzels (15) kämmen.

6. Antrieb nach einem der Ansprüche 1 bis 5, **dadurch gekennzeichnet, dass** der Innenzahnkranz (8) und/oder das wenigstens eine Hilfszahnrad (16, 16') aus Kunststoff hergestellt ist bzw. sind.

7. Antrieb nach einem der Ansprüche 1 bis 6, **dadurch gekennzeichnet, dass** die Hilfszahnräder (16') zweistufig ausgebildet sind.

8. Antrieb nach Anspruch 6 oder 7, **dadurch gekennzeichnet, dass** der Kunststoff faserverstärkt ist.

## Claims

1. An electric single wheel drive for a wheelchair or another light vehicle, with a gear housing (2) in which an axle (3) is arranged centrically, on which axle, a running wheel (4) of the light vehicle is mounted, with an electric motor (5) which is secured on the gear housing (2) and which has an eccentric motor shaft (6) that runs parallel to the axle (3) of the running wheel (4) and acts via a gear (7) arranged in the gear housing (2) on an inner toothed rim (8) in order to rotate the running wheel (4), **characterized in that** the motor shaft (6) has a gear pinion (15) that has at least two teeth (17) which helically circulate around the longitudinal axis (21) of the motor shaft (6), that the gear pinion (15) acts via two auxiliary gearwheels (16, 16') on the inner toothed rim (8), wherein the force of the gear pinion (15) is substantially uniformly distributed over the two auxiliary gearwheels (16, 16') and the axes (22) of the two auxiliary gearwheels (16, 16') run parallel to the axis of the motor shaft (6).

2. The drive according to claim 1, **characterized in that** the two auxiliary gearwheels (16, 16') are diametrically opposed with regard to the gear pinion (15).

3. The drive according to claim 1 or claim 2, **characterized in that** the gear pinion (15) has two to eight, preferably two to six and more preferably, two to four teeth (17).

4. The drive according to any one of the claims 1 to 3, **characterized in that** the teeth (17) of the gear pinion (15) have a pitch that is equal to or greater than 10°.

5. The drive according to any one of the claims 1 to 4, **characterized in that** the inner toothed rim (8) and/or the two auxiliary gearwheels (16, 16') have helical gearing with which the teeth (17) of the gear pinion (15) mesh.

6. The drive according to any one of the claims 1 to 5, **characterized in that** the inner toothed rim (8) and/or the at least one auxiliary gearwheel (16, 16') are/is made of plastic.

7. The drive according to any one of the claims 1 to 6, **characterized in that** the auxiliary gearwheels (16') are a two-stage design.

8. The drive according to claim 6 or claim 7, **characterized in that** the plastic is fiber-reinforced.

## Revendications

1. Entraînement électrique à roue unique pour un fauteuil roulant ou un autre véhicule léger, comprenant un carter d'embrayage (2), dans lequel un axe (3) est disposé de façon centrée, axe sur lequel est monté une roue de roulement(4) du véhicule léger, comprenant un moteur électrique (5) fixé sur le carter d'engrenage (2), lequel moteur présente un arbre moteur (6) excentré et disposé parallèlement à l'axe (3) de la roue de roulement (4), lequel arbre agit pour la rotation de la roue de roulement (4) au moyen d'un engrenage (7) disposé dans le carter d'engrenage (2) sur une couronne dentée intérieure (8) de la roue de roulement (4), **caractérisé en ce que** l'arbre moteur (6) présente un pignon (15), qui présente au moins deux dents (17), lesquelles tournent autour de l'axe longitudinal (21) de l'arbre moteur (6) en forme de vis, de telle sorte que le pignon (15) agit au moyen de deux roues auxiliaires (16, 16') sur la couronne dentée intérieure (8), la force du pignon (15) étant répartie essentiellement uniformément entre les deux roues dentées auxiliaires (16, 16') et les axes (22) des deux roues dentées auxiliaires (16, 16') étant agencés parallèlement à l'axe de l'arbre moteur (6).

2. Entraînement selon la revendication 1, **caractérisé en ce que** les deux roues dentées auxiliaires (16, 16') sont disposées de façon diamétralement opposée par rapport au pignon (15).

3. Entraînement selon la revendication 1 ou 2, **caractérisé en ce que** le pignon (15) présente deux jusqu'à huit, de préférence deux jusqu'à six et avec une préférence plus grande deux jusqu'à quatre dents (17).

4. Entraînement selon l'une des revendications 1 à 3, **caractérisé en ce que** les dents (17) du pignon (15) présentent une pente, qui est égale ou supérieure à 10°.

5. Entraînement selon l'une des revendications 1 à 4, **caractérisé en ce que** la couronne dentée intérieure (8) et/ou les deux roues dentées auxiliaires (16, 16') présentent une denture inclinée, avec laquelle ou avec lesquelles les dents (17) du pignon (15) s'engrènent.

6. Entraînement selon l'une des revendications 1 à 5, **caractérisé en ce que** la couronne dentée intérieure (8) et/ou la au moins une roue dentée auxiliaire (16, 16') est ou sont fabriquée(s) à base de matière plastique.

7. Entraînement selon l'une des revendications 1 à 6, **caractérisé en ce que** les roues dentées auxiliaires (16') sont conçues sur deux niveaux.

8. Entraînement selon la revendication 6 ou 7, **caractérisé en ce que** la matière plastique est renforcée de fibre.
